(19) Europäisches Patentamt / European Patent Office / Office européen des brevets

(11) **EP 3 182 615 B1**

(12) **FASCICULE DE BREVET EUROPEEN**

(45) Date de publication et mention
de la délivrance du brevet:
**15.07.2020 Bulletin 2020/29**

(51) Int Cl.:
***H04B 7/185*** *(2006.01)*

(21) Numéro de dépôt: **16203343.5**

(22) Date de dépôt: **12.12.2016**

(54) **MÉTHODE D'ALLOCATION DE RESSOURCES RADIO DANS UN SYSTÈME DE COMMUNICATIONS PAR SATELLITES DÉEFILANTS AVEC CONTRAINTE DE NIVEAU D'INTERFÉRENCES VERS UN SYSTÈME GÉOSTATIONNAIRE**

**FUNKRESSOURCEN-ZUTEILUNGSMETHODE IN EINEM KOMMUNIKATIONSSYSTEM ÜBER VORBEIZIEHENDE SATELLITEN MIT NIVEAUSPANNUNG VON INTERFERENZEN GEGENÜBER EINEM SYSTEM**

**METHOD FOR ALLOCATING RADIO RESOURCES IN A COMMUNICATION SYSTEM BY MOVING SATELLITES WITH CONSTRAINTS ON THE LEVEL OF INTERFERENCES TOWARDS A GEOSTATIONARY SYSTEM**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1502640**

(43) Date de publication de la demande:
**21.06.2017 Bulletin 2017/25**

(73) Titulaire: **Thales**
**92400 Courbevoie (FR)**

(72) Inventeurs:
• **FARAJ, Zakariya**
**31700 BLAGNAC (FR)**
• **CHUBERRE, Nicolas**
**31820 PIBRAC (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**WO-A1-2009/051907    US-A1- 2004 110 467**
**US-B1- 6 725 013**

**EP 3 182 615 B1**

**Description**

L'invention concerne le domaine des systèmes de communications par satellites et en particulier les systèmes utilisant des satellites défilants, par exemple des satellites sur orbite basse ou « low earth orbit » en anglais.

L'invention porte sur une méthode d'allocation de ressources radio dans un système de communications par satellites défilants opérant dans des bandes de fréquence réservées à des systèmes géostationnaires. L'invention concerne la prise en compte, dans la méthode d'allocation de ressources radio, du niveau d'interférences engendré par le système à satellites défilants vers un système de communications, quelconque, utilisant des satellites géostationnaires.

La réglementation relative aux radiocommunications par satellites permet le déploiement de systèmes non géostationnaires dans des bandes de fréquence auparavant réservées aux systèmes basés sur des satellites géostationnaires.

Cependant, la coexistence de deux systèmes de communications par satellites exploitant, totalement ou partiellement, les mêmes bandes de fréquence pose un problème de gestion des interférences engendrées par un système vers un autre. En l'occurrence, le système géostationnaire est susceptible d'être perturbé, voire brouillé, par les transmissions entre satellites et stations au sol appartenant au système non géostationnaire.

Pour garantir une qualité de service donnée pour un système de communications géostationnaire, l'union internationale des télécommunications (UIT ou ITU en anglais) a fixé un niveau d'interférences maximum autorisé impactant les systèmes de télécommunications géostationnaire dans leur ensemble et provenant des systèmes coexistant sur les mêmes bandes de fréquence et utilisant des satellites non géostationnaires.

Pour garantir qu'un système non géostationnaire n'engendre pas un niveau d'interférences supérieur au seuil autorisé, une solution consiste à fixer, pour l'ensemble des liaisons entre les terminaux au sol et les satellites non géostationnaires, un seuil d'angle de séparation à respecter par rapport à l'arc géostationnaire. Un exemple d'une telle solution est décrit dans la demande de brevet américaine US 2004/0110467.

L'arc géostationnaire désigne la vue de l'orbite géostationnaire depuis la Terre.

Un terminal du système non géostationnaire est autorisé à établir une liaison de communication (montante, descendante ou bidirectionnelle) avec un satellite non géostationnaire si et seulement si son angle de séparation est inférieur au seuil d'angle de séparation fixé et ce indépendamment des autres liaisons établies par les autres terminaux. Ainsi, chaque terminal voit le nombre de satellites non géostationnaires avec lesquels il peut potentiellement communiquer se réduire. En particulier, les systèmes non géostationnaires peuvent utiliser des ressources spectrales en bande Ka et les terminaux de ces systèmes peuvent opérer avec des angles d'élévation très faibles. De telles conditions entrainent l'exigence d'utilisation de puissances de transmission très importantes. De tels niveaux de puissance nécessitent alors l'utilisation d'un angle de séparation de valeur élevée pour ne pas brouiller les systèmes géostationnaires co-existants sur la même bande Ka. Typiquement, une valeur de seuil d'angle de séparation de l'ordre de 7 degrés est utilisée pour satisfaire l'ensemble de ces contraintes. Malheureusement, l'utilisation d'un angle de séparation avec une valeur fixe et élevée a pour conséquence que la couverture géographique assurée par le système non géostationnaire s'en trouve diminuée.

Une solution simple permettant d'assurer un niveau de service et une couverture géographique suffisants pour le système non géostationnaire tout en respectant le seuil d'angle de séparation préconisé, consiste à augmenter le nombre de satellites non géostationnaires dans la constellation du système. Ainsi, on assure un nombre moyen de satellites disponibles pour chaque terminal tout en interdisant les liaisons terminaux-satellites qui ne sont pas compatibles du seuil d'angle de séparation.

Cependant, l'augmentation du nombre de satellites non géostationnaires présente des inconvénients de surcoûts pour la conception du système global et également de sous-optimalité car l'ensemble des ressources de communication disponibles n'est pas pleinement utilisé du fait de l'empêchement lié à la coexistence avec les systèmes géostationnaires.

Un procédé statique décrit dans la demande de brevet US 2003/0073404 A1 propose d'éviter les alignements des liens radio fréquence terre/espace entre un nouveau système non géostationnaire (système B) et d'autres systèmes géostationnaires existants (systèmes A) partageant la même bande de fréquence.

Ce procédé s'appuie sur la prise en compte de contraintes prédictives telles que les orbites des satellites et les caractéristiques radio- fréquence des stations et des satellites des systèmes A et B.

Ce procédé statique est valable pour des systèmes opérant dans des bandes de fréquence basses comme la bande Ku. En effet, pour ce type de systèmes, l'aspect géométrique permet à lui seul de planifier de façon statique et déterministe les liens radio fréquence terre/espace à utiliser par le système B sans provoquer d'interférences sur les autres systèmes A existants et tout en assurant la qualité de service attendue pour le système B.

Cette stratégie est justifiée dès lors que les atténuations atmosphériques sont négligeables (ce qui est le cas des systèmes exploitant des bandes de fréquence basses).

Ce procédé statique n'est par contre plus approprié pour un nouveau système B opérant dans des bandes de fréquence hautes comme la bande Ka. En effet, l'utilisation de faibles élévations combinées à d'importantes atténuations atmosphériques, comme celles induites par la pluie, impose un surdimensionnement excessif en terme de puissance requise au niveau bord et au niveau sol de l'infrastructure du système B afin d'assurer la qualité de service attendue.

Une variante du procédé ci-dessus consiste à imposer que les liens radio fréquence terre/espace du nouveau système B ne puissent être mis en œuvre que lorsque les satellites du système B sont vus par les stations du système B avec un angle d'élévation élevé. Ceci permet de réduire la dynamique des atténuations atmosphériques même dans des bandes de fréquence hautes comme la bande Ka.

Néanmoins, cette stratégie impose un surdimensionnement en terme de nombre de satellites à déployer par le système B afin d'assurer le taux de visibilité requis par ce dernier. Ce surdimensionnement a un fort impact sur le coût et le déploiement des infrastructures sol et bord du système B.

La présente invention propose de remédier aux inconvénients précités par une méthode d'allocation de ressources radio, dans un système de communications par satellites défilants, qui définit, de façon dynamique, un seuil d'angle de séparation à respecter pour chaque terminal en fonction d'un niveau global d'interférences engendré vers les systèmes géostationnaires.

L'invention permet de maximiser la couverture géographique en minimisant le nombre de satellites dans la constellation du système non géostationnaire tout en garantissant que le niveau d'interférences induit vers les systèmes géostationnaires exploitant des bandes de fréquences totalement ou partiellement identiques ne dépasse pas le seuil réglementaire.

L'invention a pour objet une méthode d'allocation de ressources radio pour l'établissement de communications par satellites dans un premier système de communications comprenant une constellation de satellites défilants et un premier ensemble de terminaux, la méthode comprenant les étapes suivantes, pour chaque terminal du premier ensemble :

- déterminer, un seuil d'angle de séparation distinct à respecter vis-à-vis d'une constellation de satellites géostationnaires, un angle de séparation étant défini comme l'angle topocentrique le plus faible sous lequel un satellite défilant donné et un satellite géostationnaire quelconque de l'arc géostationnaire sont vus depuis un terminal donné du premier ensemble,
- autoriser le terminal à établir une liaison de communication avec un satellite défilant si l'angle de séparation associé à ladite liaison est supérieur ou égal au seuil d'angle de séparation.

Selon un aspect particulier de l'invention, le seuil d'angle de séparation distinct à respecter, pour chaque terminal du premier ensemble est déterminé de manière à ce que l'ensemble des liaisons de communications autorisées engendrent, sur un système de communications par satellites géostationnaires, un niveau de puissance interférente conforme à une limite réglementaire.

Selon un aspect particulier de l'invention, la détermination d'un seuil d'angle de séparation comprend :

- le calcul d'au moins un niveau de puissance interférente engendrée par l'ensemble des liaisons de communications entre les terminaux du premier ensemble et les satellites défilants (vers un système de communications par satellites géostationnaires,
- la recherche itérative, pour chaque terminal du premier ensemble, de la valeur minimale du seuil d'angle de séparation permettant de maintenir ledit au moins un niveau de puissance interférente calculé conforme à une limite réglementaire.

Selon un aspect particulier de l'invention, la détermination d'un seuil d'angle de séparation comprend une phase d'initialisation consistant à attribuer une valeur initiale au seuil d'angle de séparation, pour chaque terminal, et à déclarer chaque terminal candidat à l'abaissement de son seuil d'angle de séparation.

Selon un aspect particulier de l'invention, ladite recherche itérative comprend, pour chaque terminal et à chaque itération, l'association dudit terminal avec un satellite défilant respectant le seuil d'angle de séparation déterminé à l'itération courante et pour lequel l'angle de séparation est le plus proche dudit seuil, les itérations étant poursuivies tant qu'au moins un terminal est candidat à l'abaissement de son seuil d'angle de séparation.

Selon un aspect particulier de l'invention, les liaisons de communication entre les terminaux du premier ensemble et les satellites défilants sont bidirectionnelles ou unidirectionnelles montantes et ladite recherche itérative comprend le calcul d'un premier niveau de puissance interférente engendrée par l'ensemble des liaisons de communications montantes vers l'arc géostationnaire pour un ensemble de positions supposées de satellites géostationnaires.

Selon un aspect particulier de l'invention, le calcul dudit premier niveau de puissance interférente est déterminé en choisissant, pour chaque satellite géostationnaire, une direction de pointage qui permet de maximiser la valeur dudit premier niveau de puissance interférente.

Selon un aspect particulier de l'invention, ladite recherche itérative comprend la recherche d'au moins un satellite géostationnaire pour lequel le premier niveau de puissance interférente calculé n'est pas conforme à la dite limite réglementaire.

Selon un aspect particulier de l'invention, les liaisons de communications entre les terminaux du premier ensemble et les satellites défilants sont unidirectionnelles descendantes et ladite recherche itérative comprend le calcul d'un second niveau de puissance interférente engendrée par l'ensemble des liaisons de communication descendantes vers un ensemble de positions supposées de terminaux appartenant à un système de communications par satellites géostationnaires.

Selon un aspect particulier de l'invention, les liaisons de communication entre les terminaux du premier ensemble et les satellites défilants sont bidirectionnelles et ladite recherche itérative comprend le calcul d'un second niveau de puissance interférente engendrée par l'ensemble des liaisons de communication descendantes vers un ensemble de positions supposées de terminaux appartenant à un système de communications par satellites géostationnaires.

Selon un aspect particulier de l'invention, le calcul dudit second niveau de puissance interférente est déterminé en choisissant, pour chaque terminal appartenant à un système de communications par satellites géostationnaires, une direction de pointage qui permet de maximiser la valeur dudit second niveau de puissance interférente.

Selon un aspect particulier de l'invention, ladite recherche itérative comprend la recherche d'au moins un terminal appartenant à un système de communications par satellites géostationnaires pour lequel le second niveau de puissance interférente calculé n'est pas conforme audit seuil réglementaire.

Selon un aspect particulier de l'invention, ladite recherche itérative comprend, pour chaque premier ou second niveau de puissance interférente calculé non conforme audit seuil réglementaire, la recherche d'au moins un couple (terminal du premier ensemble, satellite défilant) dont la contribution, dans la valeur du premier ou du second niveau de puissance interférente, est la plus élevée.

Selon un aspect particulier de l'invention, ladite recherche itérative comprend, pour chaque terminal du couple (terminal du premier ensemble, satellite défilant) retenu, le rétablissement du seuil d'angle de séparation déterminé à l'itération précédente et le retrait dudit terminal de la liste des candidats à l'abaissement du seuil d'angle de séparation.

Selon un aspect particulier de l'invention ladite recherche itérative comprend, pour au moins un terminal du couple (terminal du premier ensemble, satellite défilant) retenu, l'adaptation des caractéristiques RF d'au moins une liaison impliquant ledit terminal et un satellite défilant, de sorte à diminuer le niveau de puissance interférente de l'ensemble des liaisons de communications autorisées sur un système de communications par satellites géostationnaires.

Selon un aspect particulier de l'invention, la recherche itérative comprend une vérification de la conformité du premier niveau de puissance interférente et/ou du second niveau de puissance interférente et, si la conformité est vérifiée, l'abaissement du seuil d'angle de séparation d'une valeur prédéterminée, pour chaque terminal candidat à l'abaissement de son seuil d'angle de séparation.

Selon un aspect particulier de l'invention la recherche itérative est arrêtée lorsqu'aucun terminal n'est plus candidat à l'abaissement de son seuil d'angle de séparation.

L'invention a aussi pour objet un dispositif d'allocation de ressources radio pour l'établissement de communications par satellites comprenant des moyens, incluant au moins un processeur et une mémoire, configurés pour mettre en œuvre la méthode d'allocation de ressources radio selon l'invention.

L'invention a aussi pour objet un programme d'ordinateur comportant des instructions pour l'exécution de la méthode d'allocation de ressources radio pour l'établissement de communications par satellites selon l'invention, lorsque le programme est exécuté par un processeur.

L'invention a aussi pour objet un support d'enregistrement lisible par un processeur sur lequel est enregistré un programme comportant des instructions pour l'exécution de la méthode d'allocation de ressources radio pour l'établissement des communications par satellites selon l'invention, lorsque le programme est exécuté par un processeur.

D'autres caractéristiques et avantages de la présente invention apparaîtront mieux à la lecture de la description qui suit en relation aux dessins annexés qui représentent :

- La figure 1, un synoptique représentant le contexte d'application de l'invention,
- La figure 2, un organigramme détaillant les étapes d'une méthode de conception d'un système de communications par satellites non géostationnaires selon l'invention,
- La figure 3, un organigramme détaillant les étapes d'une méthode d'allocation de ressources radio selon l'invention,
- La figure 4, un organigramme détaillant les étapes d'une fonction de détermination dynamique d'un seuil d'angle de séparation, selon un premier mode de réalisation de l'invention,
- La figure 5a, un schéma illustrant un exemple de calcul d'interférences global relatif aux voies montantes,
- La figure 5b, un schéma illustrant un exemple de calcul d'interférences global relatif aux voies descendantes,
- La figure 6, un organigramme détaillant les étapes d'une fonction de détermination dynamique d'un seuil d'angle de séparation, selon un deuxième mode de réalisation de l'invention appliqué aux liaisons montantes,
- La figure 7, un organigramme détaillant les étapes d'une fonction de détermination dynamique d'un seuil d'angle de séparation, selon un deuxième mode de réalisation de l'invention appliqué aux liaisons descendantes.

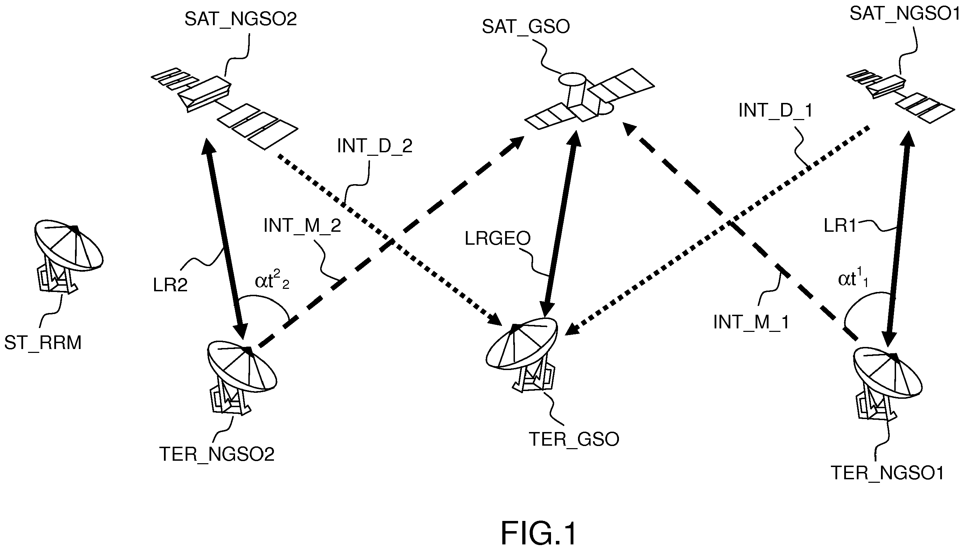

La figure 1 représente schématiquement un exemple de scénario d'application de l'invention comprenant un premier système de communications par satellites défilants et un second système de communications par satellites qui est un système géostationnaire. Le premier système de communications comprend une pluralité de satellites SAT_NGSO1,SAT_NGSO2 et un ensemble de terminaux au sol TER_NGSO1,TER_NGSO2. Les terminaux peuvent être fixes ou mobiles et sont aptes à communiquer avec chaque satellite du système selon une liaison montante ou une liaison descendante ou une liaison bidirectionnelle LR1,LR2. De même, le second système de communications géostationnaire comprend une pluralité de satellites géostationnaires et un ensemble de terminaux. Pour simplifier, sur la figure 1 ne sont représentés qu'un satellite SAT_GSO et un terminal TER_GSO constituant le second système de communications et communiquant l'un avec l'autre via une liaison par satellite LRGEO.

Un terminal peut être tout équipement de réseau capable d'échanger et de communiquer via une liaison sans fil avec un satellite. Il peut s'agir en particulier d'un ordinateur fixe ou portable, d'un téléphone fixe ou portable, d'un assistant personnel numérique, d'un serveur ou encore d'un modem d'accès à l'Internet par satellite.

Le premier système de communications par satellites et le second système de communications par satellites sont aptes à établir des communications dans des bandes de fréquence totalement ou partiellement identiques. Un exemple de bande de fréquences utilisée est la bande Ka. Un autre exemple est la bande Ku.

Le premier système de communications par satellites comprend en outre une station satellitaire ST_RRM comprenant un sous-système de contrôle chargé de gérer l'allocation de ressources de communication au sein du système. La présente invention peut être implémentée dans le sous-système de contrôle.

L'invention peut être implémentée à partir d'éléments matériel et/ou logiciel. Elle peut notamment être mise en œuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

L'invention peut aussi être implémentée par un dispositif du type sous-système de contrôle embarqué dans une station satellite, le dispositif comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le dispositif peut utiliser un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel).

A titre d'exemple d'architecture matérielle adaptée à mettre en œuvre l'invention, un dispositif selon l'invention peut comporter un bus de communication auquel sont reliés une unité centrale de traitement ou microprocesseur (CPU, acronyme de « *Central Processing Unit* » en anglais), une mémoire morte (ROM, acronyme de « *Read Only Memory* » en anglais) pouvant comporter les programmes nécessaires à la mise en œuvre de l'invention; une mémoire vive ou mémoire cache (RAM, acronyme de « *Random Access Memory* » en anglais) comportant des registres adaptés à enregistrer des variables et paramètres créés et modifiés au cours de l'exécution des programmes précités; et une interface de communication ou E/S (I/O acronyme de « *Input/ouput* » en anglais) adaptée à transmettre et à recevoir des données.

On introduit à présent une définition d'un angle, qui est identifié sur la figure 1. Cet angle est utilisé par la suite pour expliciter les modes de réalisation de l'invention.

On considère un angle at désigné par la suite par angle topocentrique. Pour rappel, un angle topocentrique est un angle sous lequel deux points donnés sont vus d'un point spécifique de la Terre. L'angle topocentrique particulier at considéré dans le contexte de l'invention est un angle formé par la direction entre un terminal et un satellite du premier système et par la direction entre ce même terminal et un satellite du système géostationnaire. Sur la figure 1, on a, à titre d'exemple, représenté l'angle topocentrique $\alpha t_1^1$ associé au terminal TER_NGSO1 et aux satellites SAT_NGSO1,SAT_GSO. On a représenté également l'angle topocentrique $\alpha t_2^2$ associé au terminal TER_NGSO2 et aux satellites SAT_NGSO2,SAT_GSO.

On définit également la notion d'angle de séparation, pour une liaison entre un terminal du premier système TER_NGSO1,TER_NGSO2 et un satellite défilant du premier système SAT_NGSO1,SAT_NGSO2 comme étant l'angle topocentrique le plus faible en faisant varier la position d'un satellite géostationnaire sur l'ensemble des points possibles de l'arc géostationnaire.

Autrement dit, l'angle de séparation est défini comme étant l'angle minimum sous lequel un satellite défilant de la première constellation et n'importe quel satellite géostationnaire sont vus depuis un terminal du premier système de communications.

On parle d'angle de séparation car cet angle définit la proximité entre la liaison reliant un terminal du premier système avec un satellite défilant de la première constellation et les satellites géostationnaires. Plus cet angle est faible, plus il y a de probabilité que cette liaison interfère sur les satellites géostationnaires mais aussi sur les terminaux au sol des systèmes géostationnaires. En particulier, l'interférence générée sur les satellites géostationnaires provient du signal émis par un terminal de la première constellation vers l'espace, autrement dit sur la liaison montante Terre vers espace. Sur la figure 1, on a schématiquement représenté les interférences INT_M_1 générées par le terminal TER_NGSO1 sur le satellite géostationnaire SAT_GSO ainsi que les interférences INT_M_2 générées par le terminal TER_NGSO2 sur le satellite géostationnaire SAT_GSO.

De même, l'interférence générée sur les terminaux au sol TER_GSO appartenant à des systèmes géostationnaires provient du signal émis par un satellite défilant du premier système de communications, autrement dit de la liaison descendante espace vers Terre. Sur la figure 1, on a identifié également les interférences INT_D_1 générées par le satellite SAT_NGSO1 vers le terminal TER_GSO du système géostationnaire ainsi que les interférences INT_D_2 générées par le satellite SAT_NGSO2 vers ce même terminal TER_GSO.

Comme indiqué en préambule, une solution permettant de respecter un niveau d'interférences réglementaire consiste à fixer un seuil pour cet angle de séparation, par exemple un seuil égal à 7°, en dessous duquel, la liaison entre un terminal et un satellite du premier système est interdite obligeant alors à sélectionner un autre satellite, pour l'établissement d'une liaison avec le terminal, de sorte à respecter un angle de séparation supérieur au seuil fixé.

Il convient de noter que le terme « angle de séparation » peut également être remplacé par « angle d'évitement » en français ou « avoidance angle » ou « separation angle » en anglais.

L'invention propose une méthode de configuration dynamique des seuils appliqués aux angles de séparation pour améliorer l'allocation de ressources de communication disponibles au sein du premier système de communications tout en garantissant un respect du niveau d'interférences règlementaire engendré sur les systèmes de communications par satellites géostationnaires.

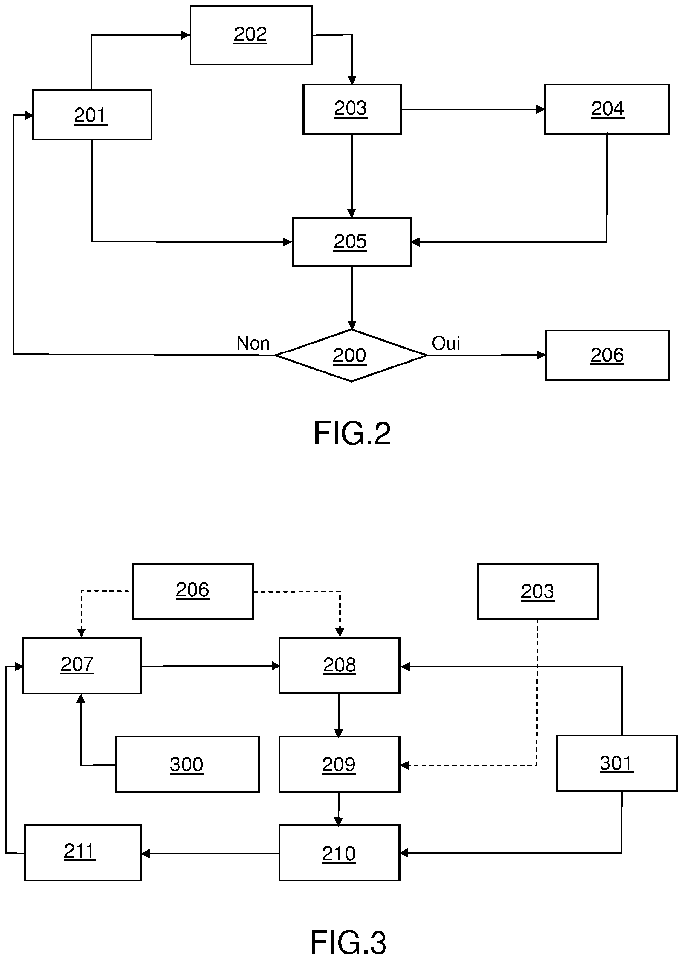

La figure 2 schématise un organigramme détaillant les étapes d'une méthode de conception d'un système de communications par satellites selon l'invention. Cette méthode a pour fonction globale la gestion statique de ressources radio du système. Une telle fonction est usuellement désignée par l'expression anglo-saxonne « static radio resources management ».

Dans une première étape 201, un opérateur de satellites fournit une demande de besoins d'un système de communications qui comprend des besoins en qualité de service, disponibilité globale, débit global, taux d'erreurs ou autres caractéristiques générales de fonctionnement d'un tel système.

Dans une deuxième étape 202, on évalue l'impact des conditions locales atmosphériques pour chaque terminal susceptible d'être intégré au système. Cette évaluation peut se faire en caractérisant le niveau d'atténuation du signal reçu ou émis par un terminal en fonction de l'élévation du terminal.

Dans une troisième étape 203, on effectue un calcul de bilan de liaison à la fois pour les liaisons montantes et les liaisons descendantes du système. Le calcul du bilan de liaison prend notamment comme paramètre d'entrée le niveau maximum d'atténuation en fonction de l'élévation pour chaque terminal. Pour la liaison montante, le bilan de liaison peut être évalué par un calcul de la puissance isotrope rayonnée équivalente (PIRE) requise au niveau du terminal. Pour la liaison descendante, le bilan de liaison peut être évalué par un calcul du rapport signal à bruit G/T requis au niveau du terminal.

Dans une quatrième étape 204, on évalue les caractéristiques particulières des terminaux à déployer pour satisfaire le bilan de liaison. De telles caractéristiques peuvent notamment inclure le type d'antenne ou le type d'amplificateur embarqué dans le terminal. En outre, des fonctionnalités supplémentaires de traitement de signal peuvent être incorporées dans les terminaux du système afin de lutter contre les atténuations atmosphériques du signal.

Dans une cinquième étape 205, on vérifie que les besoins de l'opérateur peuvent être satisfaits en prenant en compte les caractéristiques des terminaux sélectionnés à l'issue de l'étape 204 et en prenant en compte les plages d'atténuation du signal en fonction des plages d'élévation des différents terminaux.

Si les besoins des connexions 200 ne peuvent être satisfaits, une négociation est établie avec l'opérateur pour réduire les exigences en termes de qualité de service ou de débit.

Si au contraire, les besoins des connexions 200 sont satisfaits alors les besoins d'établissement de communications entre les terminaux et les satellites sont validés et on passe, par l'intermédiaire d'une étape 206 vers un processus d'allocation de ressources radio. L'étape 206 consiste à lister, pour chaque terminal du système, ses caractéristiques radio-fréquence ainsi que le débit requis.

La figure 3 détaille, sur un organigramme, les étapes de la méthode d'allocation de ressources selon l'invention.

Cette méthode a pour fonction globale une gestion dynamique de ressources radio du système ou « dynamic radio resources management » en anglais. En particulier, l'allocation de ressources radio est réalisée au fil du temps en prenant en compte les trajectoires dynamiques des satellites non géostationnaires.

La méthode débute à l'étape 206 qui analyse le nombre, le type, l'emplacement, les caractéristiques radio fréquence et le débit requis de chacun des terminaux du système déterminés à l'issue de la méthode de conception décrite à la figure 2.

Dans une étape 208, on identifie les ressources radio disponibles pour chaque terminal. Autrement dit, on identifie les satellites de la constellation du système qui sont en ligne de visée de chaque terminal et qui respectent un seuil d'angle de séparation déterminé, pour chaque terminal, via l'étape 207 décrite plus en détail ci après. Pour chaque satellite, l'identification des ressources radio peut également comprendre l'identification des porteuses fréquentielles qui peuvent être utilisées pour communiquer et le nombre et le type des antennes embarquées à bord du satellite, en particulier la polarisation des antennes.

A l'issue de l'étape 208, on obtient une liste de satellites et de ressources radio associées qui peuvent potentiellement être utilisées par chaque terminal.

Dans une étape 209, on effectue, pour chaque terminal, un tri dans la liste des satellites obtenus afin d'établir un ordre de priorité pour l'allocation de ressources radio. Les priorités sont définies à partir d'un score attribué à chaque liaison, le score étant déterminé notamment en fonction d'un calcul de bilan de liaison qui peut être fourni par l'étape 203 de la méthode de conception décrite à la figure 2.

Dans une étape 210, on effectue ensuite une allocation de ressources radio pour chaque terminal en fonction du score de priorité attribué à l'étape 209.

Les étapes 208 et 210 sont réalisées notamment à partir des contraintes opérationnelles du système 301.

Dans une étape 211, on agrège toutes les liaisons radio actives à partir des résultats de l'étape 210 d'allocation de ressources. Autrement dit, on identifie toutes les liaisons montantes et les liaisons descendantes entre terminaux et satellites afin d'avoir une vision globale des liaisons radio actives.

Dans une étape 207, on détermine ensuite dynamiquement, selon l'invention, pour chaque terminal, un seuil d'angle de séparation qui permet de respecter les besoins globaux en termes de débits requis tout en respectant les contraintes de niveau d'interférences sur les systèmes de communications par satellites géostationnaires opérant sur les mêmes bandes de fréquence. Cette étape 207 prend notamment en entrée, les caractéristiques de la constellation des satellites du système, notamment les positions des satellites défilants, mais aussi les contraintes réglementaires de niveau d'interférences et les caractéristiques des systèmes géostationnaires que l'on souhaite préserver.

La détermination d'un seuil d'angle de séparation à respecter pour chaque terminal prend notamment en compte un calcul de niveau d'interférences global du premier système vers l'arc géostationnaire et vers les stations sol.

L'étape 207 fournit ensuite à l'étape 208, pour la prochaine itération de la méthode, un seuil d'angle de séparation à respecter pour chaque terminal pour établir une liaison avec un satellite, de sorte à respecter les réglementations imposées pour le niveau d'interférences global.

Les étapes 208, 209, 210 sont alors itérées en éliminant de la liste des satellites disponibles pour chaque terminal, ceux qui ne permettent pas d'obtenir un angle de séparation supérieur ou égal au seuil d'angle de séparation.

L'étape 210 d'allocation de ressources radio peut ainsi conduire à attribuer à un terminal d'autres satellites que ceux choisis initialement ou à la précédente itération.

Selon un aspect particulier de l'invention, les liaisons entre terminaux et satellites peuvent être bidirectionnelles ou unidirectionnelles. Un terminal peut être autorisé à communiquer avec deux satellites différents sur la voie montante et sur la voie descendante ou au contraire, les deux voies peuvent être liées en une seule liaison bidirectionnelle entre un terminal et un satellite.

Si les liaisons entre terminaux et satellites sont bidirectionnelles, alors l'étape 207 de la méthode selon l'invention consiste en la détermination d'un seuil d'angle de séparation associé à chaque terminal.

Si, au contraire, un terminal peut communiquer sur une liaison montante avec un satellite et sur une liaison descendante avec un autre satellite, alors l'étape 207 de la méthode est dupliquée pour déterminer un premier seuil d'angle de séparation applicable à chaque terminal pour les liaisons montantes et un second seuil d'angle de séparation applicable à chaque terminal pour les liaisons descendantes.

La méthode d'allocation de ressources radio selon l'invention décrite à la figure 3 peut être exécutée avec une cadence donnée ou en réaction à un évènement de la vie du système, par exemple l'entrée ou la sortie d'un terminal.

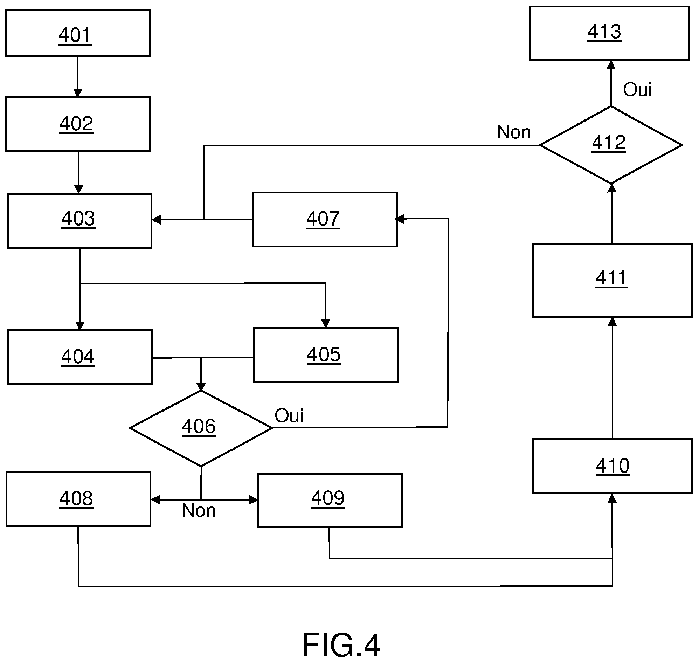

La figure 4 illustre un premier exemple de réalisation, selon l'invention, de la méthode de détermination dynamique d'un seuil d'angle de séparation pour chaque terminal, exécutée à l'étape 207. Selon ce premier exemple, les liaisons entre terminaux et satellites du premier système de communications sont considérées bidirectionnelles, c'est à dire qu'un terminal communique avec un même satellite sur la liaison montante et sur la liaison descendante. Dans une première étape 401, les terminaux actifs du premier système de communication sont identifiés ainsi que les satellites défilants de la première constellation avec lesquels ils peuvent communiquer selon la liste établie à l'issue de l'étape 208 de la méthode d'allocation de ressources radio décrite à la figure 3.

Pour chaque terminal actif, on fixe une valeur prédéfinie initiale de seuil à respecter pour l'angle de séparation. Ce seuil peut être, par exemple fixé à une valeur de 7°. Dans une étape 402, tous les terminaux actifs sont ensuite déclarés candidats pour l'abaissement potentiel de leur seuil d'angle de séparation. Cette déclaration peut se faire, par exemple, par le biais d'un vecteur ou d'une table dans laquelle sont listés les terminaux actifs identifiés par un identifiant numérique et une information binaire indiquant si le terminal est candidat ou non à l'abaissement potentiel de son seuil d'angle de séparation.

Dans une étape 403, on associe à chaque terminal du premier système, un satellite de la première constellation qui respecte le seuil d'angle de séparation fixé à l'étape précédente et qui correspond à l'angle de séparation le plus proche du seuil. A l'issue de l'étape 403, on obtient donc, pour chaque terminal, un satellite associé de sorte que la liaison entre ce terminal et ce satellite respecte le seuil d'angle de séparation tout en minimisant la valeur de l'angle de séparation. Dans certains cas, aucun satellite ne peut être retenu car aucun satellite ne permet de respecter le seuil d'angle de séparation initial fixé. Ce scénario est traité dans une variante de réalisation de l'invention décrite plus loin.

La méthode se poursuit ensuite avec les étapes 404 et 405 dans lesquelles un calcul de niveau d'interférences global pire cas est réalisé. La notion de calcul « pire cas » consiste à réaliser ce calcul pour un angle de séparation minimum, identifié à l'étape précédente 403, le plus proche du seuil considéré pour chaque terminal. Selon le premier exemple de réalisation de la méthode de détermination d'un seuil d'angle de séparation décrit à la figure 4, un premier calcul de niveau d'interférences global pire cas pour les liaisons montantes entre terminaux et satellites du premier système de communication est réalisé à l'étape 404 et un second calcul de niveau d'interférences global pire cas pour les liaisons descendantes entre satellites et terminaux du premier système de communication est réalisé à l'étape 405. Le premier et le second calcul de niveau d'interférences sont effectués en agrégeant les contributions de niveau d'interférences pour chaque terminal actif (pour la liaison montante) ou pour chaque satellite actif (pour la liaison descendante).

Le premier calcul de niveau d'interférences concerne les interférences générées par les émissions des terminaux actifs vers l'espace sur les satellites de l'arc géostationnaire. Il s'agit des interférences du type de celles référencées INT_M_1,INT_M_2 sur la figure 1.

Le second calcul de niveau d'interférences concerne les interférences générées par les émissions des satellites actifs vers la Terre sur les terminaux appartenant aux systèmes de communications par satellites géostationnaires. Il s'agit des interférences du type de celles référencées INT_D_1, INT_D_2 sur la figure 1.

Le niveau d'interférences global généré peut être calculé par le biais d'un calcul de puissance surfacique équivalente ou « équivalent power flux-density » en anglais.

Le calcul de puissance surfacique équivalente peut, par exemple, être effectué à l'aide de la méthode décrite dans la recommandation UIT-R S.1325-3 de l'Union Internationale des Télécommunications qui est reprise ici.

Selon cette recommandation la puissance surfacique équivalente epfd est définie comme étant la somme des puissances surfaciques produites au niveau d'une station de réception d'un système brouillé (située à la surface de la Terre ou en orbite, selon le cas) par toutes les stations d'émission d'un système brouilleur, compte tenu de la discrimination hors-axe d'une antenne de réception de référence que l'on suppose pointée vers sa direction nominale.

Dans le cas présent, le système brouilleur est le premier système de communications par satellites défilants et le système brouillé est un système de communications par satellites géostationnaires.

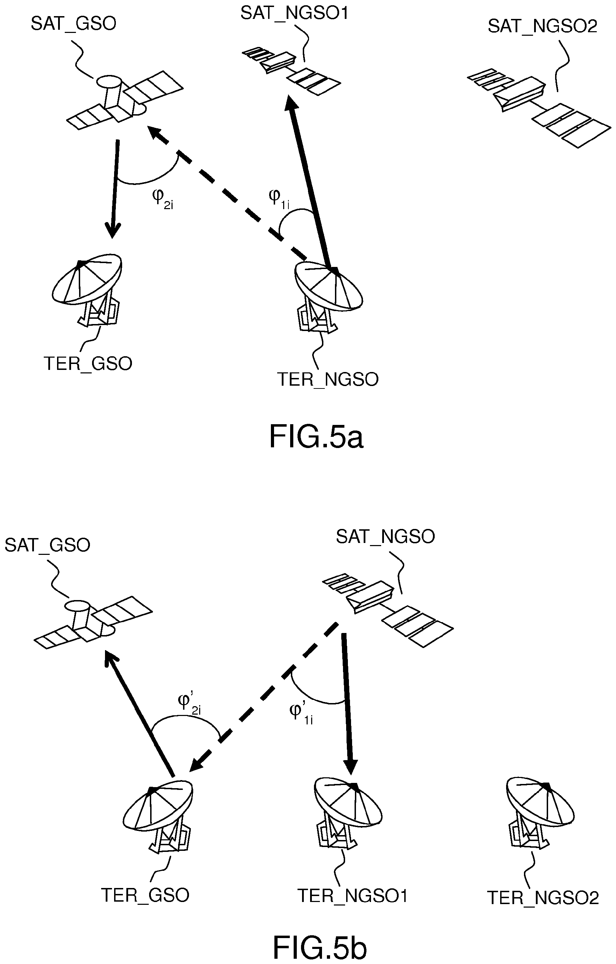

La figure 5a représente, sur un schéma, un terminal TER_NGSO et deux satellites SAT_NGSO1, SAT_NGSO2 du premier système de communications ainsi qu'un terminal TER_GSO et un satellite SAT_GSO d'un système géostationnaire. Le paragraphe suivant explicite un exemple de calcul 404 de la puissance surfacique équivalente epfd_up calculée pour les interférences produites par les émissions du terminal TER_NGSO vers le satellite SAT_GSO du système géostationnaire.

Pour chaque position de l'arc géostationnaire, la puissance surfacique équivalente epfd_up pour les liaisons montantes (premier calcul de niveau d'interférence 404) peut être calculée par l'intermédiaire de la relation (1) suivante :

$$epfd\_up = 10\log_{10}\left(\sum_{i=1}^{i=N_a} 10^{P_i/10}\,\frac{G_t(\varphi_{1i})}{4\pi\,R_i^2}\,\frac{G_r(\varphi_{2i})}{G_{r_{max}}}\right) \qquad (1)$$

où:

$N_a$ est le nombre de terminaux du premier système de communication visibles depuis un satellite géostationnaire (sur la figure 5a, un seul terminal TER_NGSO est représenté)

i est l'indice du terminal considéré appartenant au premier système de communication,

$P_i$ est la puissance RF en entrée de l'antenne du terminal TER_NGSO considéré appartenant au premier système de communication (dBW),

$G_t(\varphi_{1i})$ est le gain de l'antenne d'émission du terminal TER_NGSO considéré appartenant au premier système de communication en direction d'un satellite géostationnaire SAT_GSO,

$G_r(\varphi_{2i})$ est le gain de l'antenne de réception d'un satellite géostationnaire SAT_GSO en direction du $i^{ème}$ terminal considéré du premier système de communication TER_NGSO,

$G_{r\,max}$ est le gain maximum de l'antenne d'un satellite géostationnaire SAT_GSO,

$\varphi_{1i}$ est l'angle entre l'axe de visée du terminal TER_NGSO considéré (indice i) appartenant au premier système de communication et la direction entre le terminal TER_NGSO et un satellite géostationnaire SAT_GSO (angle représenté sur la figure 5a),

$\varphi_{2i}$ est l'angle entre l'axe de visée d'un satellite géostationnaire SAT_GSO et la direction entre ce satellite SAT_GSO et le $i^{\text{ème}}$ terminal TER_NGSO considéré du premier système de communication (angle représenté sur la figure 5a), $R_i$ est la distance entre le terminal TER_NGSO considéré du premier système de communication et le satellite géostationnaire SAT_GSO.

Le calcul de La puissance surfacique équivalente epfd_up pour les liaisons montantes est réalisé pour tous les points de l'arc géostationnaire avec un échantillonnage approprié. La direction de pointage du satellite géostationnaire SAT_GSO, autrement dit la valeur de l'angle $\varphi_{2i}$ est choisie de sorte à maximiser la valeur du niveau d'interférence epfd_up. La direction de pointage du terminal du premier système TER_NGSO, autrement dit la valeur de l'angle $\varphi_{1i}$, est donnée par la direction entre ce terminal TER_NGSO et le satellite SAT_NGSO sélectionné à l'étape 403 (satellite qui permet de minimiser l'angle de séparation).

La valeur du seuil d'angle de séparation a une influence à la fois sur l'angle $\varphi_{1i}$ et sur l'angle $\varphi_{2i}$ puisque cette valeur définit l'éloignement relatif du satellite défilant SAT_NGSO par rapport au satellite géostationnaire SAT_GSO. En conséquence, la valeur du seuil d'angle de séparation a une influence sur le gain de l'antenne de réception d'un satellite géostationnaire SAT_GSO dans la direction de visée du terminal TER_NGSO du premier système et sur le gain de l'antenne d'émission du terminal TER_NGSO du premier système dans la direction de visée du satellite géostationnaire SAT_GSO.

La figure 5b représente, sur un schéma, deux terminaux TER_NGSO1,TER_NGSO2 et un satellite SAT_NGSO du premier système de communications ainsi qu'un terminal TER_GSO et un satellite SAT_GSO d'un système géostationnaire. Le paragraphe suivant explicite un exemple de calcul 405 de la puissance surfacique équivalente epfd_down calculée pour les interférences produites par les émissions du satellite SAT_NGSO vers le terminal TER_GSO du système géostationnaire.

De la même façon, pour chaque terminal TER_GSO placé sur un point de la surface de la terre, la puissance surfacique équivalente epfd_down pour les liaisons descendantes (second calcul de niveau d'interférence 405) peut être calculée par l'intermédiaire de la relation (2), identique à la relation (1) mais appliquée aux variables suivantes :

$$epfd\_down = 10\log_{10}\left( \sum_{j=1}^{j=N_b} 10^{P'_j/10} \frac{G'_t(\varphi'_{1j})}{4\pi R'^2_j} \frac{G'_r(\varphi'_{2j})}{G'_{r_{max}}} \right) \qquad (2)$$

$N_b$ est le nombre de satellites de la première constellation visibles depuis un terminal appartenant au système géostationnaire (sur la figure 5b, on a représenté, à titre purement illustratif, un seul satellite SAT_NGSO),

$P'_i$ est la puissance RF en entrée de l'antenne du satellite SAT_NGSO considéré appartenant à la première constellation (dBW),

$G'_t(\varphi'1i)$ est le gain de l'antenne d'émission du satellite SAT_NGSO considéré appartenant à la première constellation en direction d'un terminal TER_GSO appartenant au système géostationnaire,

$G'_r(\varphi'_{2i})$ est le gain de l'antenne de réception d'un terminal TER_GSO appartenant au système géostationnaire en direction du $i^{\text{ème}}$ satellite SAT_NGSO considéré de la première constellation,

$G'_{r_{max}}$ est le gain maximum de l'antenne d'un terminal TER_GSO du système géostationnaire,

$\varphi'_{1i}$ est l'angle entre l'axe de visée du satellite SAT_NGSO considéré (indice i) appartenant à la première constellation et la direction entre ce satellite SAT_NGSO et un terminal TER_GSO appartenant au système géostationnaire (angle représenté sur la figure 5b),

$\varphi'_{2i}$ est l'angle entre l'axe de visée d'un terminal TER_GSO appartenant au système géostationnaire et la direction entre ce terminal TER_GSO et le $i^{\text{ème}}$ satellite SAT_NGSO considéré de la première constellation (angle représenté sur la figure 5b),

$R'_i$ est la distance entre le satellite SAT_NGSO considéré de la première constellation et le terminal TER_GSO du système géostationnaire.

La relation (2) est appliquée pour un ensemble de positions supposées de terminaux d'un système géostationnaire selon un maillage prédéfini et approprié de la surface de la Terre. La direction de pointage du terminal TER_GSO appartenant au système géostationnaire, autrement dit la valeur de l'angle $\varphi'_{2i}$ est choisie de sorte à maximiser la valeur du niveau d'interférence epfd_down. La direction de pointage du satellite SAT_NGSO, autrement dit la valeur de l'angle $\varphi'_{1i}$, est la direction de pointage du satellite SAT_NGSO sélectionné à l'étape 403 (satellite qui permet de minimiser l'angle de séparation) vers le terminal TER_NGSO considéré.

La valeur du seuil d'angle de séparation a une influence à la fois sur l'angle $\varphi'_{1i}$ et sur l'angle $\varphi'_{2i}$ puisque cette valeur définit l'éloignement relatif du satellite défilant SAT_NGSO par rapport au satellite géostationnaire SAT_GSO. En conséquence, la valeur du seuil d'angle de séparation a une influence sur le gain de l'antenne de réception d'un terminal TER_GSO appartenant au système géostationnaire dans la direction de visée du satellite SAT_NGSO du premier système et sur le gain de l'antenne d'émission du satellite SAT_NGSO du premier système dans la direction de visée du terminal TER_GSO.

La méthode se poursuit avec l'application d'une étape 406 consistant en un test de conformité des niveaux d'interférences calculés aux étapes 404 et 405 avec des limites spécifiées réglementairement, par exemple par l'Union Internationale des Télécommunications.

Dans l'étape 406, on applique un premier test de conformité pour les liaisons montantes consistant à comparer le premier niveau d'interférences global Epfd_up avec une première limite réglementaire. De même, on applique un second test de conformité pour les liaisons descendantes consistant à comparer le second niveau d'interférences global Epfd_down avec une seconde limite réglementaire.

Les tests de conformité de l'étape 406 peuvent consister plus généralement à évaluer si le premier niveau d'interférences global Epfd_up et le second niveau d'interférences global Epfd_down sont acceptables ou non du point de vue du fonctionnement des systèmes géostationnaires.

Si les deux tests de conformité réalisés à l'étape 406 sont conformes, autrement dit si les deux niveaux d'interférences globaux sont chacun inférieurs aux limites réglementaires sur tout l'arc géostationnaire et pour toutes les hypothèses de positions de terminaux d'un système géostationnaire, alors la méthode se poursuit avec une étape 407 qui consiste à diminuer, d'une valeur prédéterminée, la valeur du seuil d'angle de séparation pour chaque terminal candidat à l'abaissement de son seuil.

A la suite de l'étape 407, la méthode redémarre à l'étape 403 pour une nouvelle itération.

L'abaissement du seuil d'angle de séparation est ici possible car le niveau global d'interférences généré en fixant le seuil d'angle de séparation à la valeur initiale établie à la première étape 401, ne dépasse pas les limites réglementaires.

Si au contraire, l'un des deux tests de conformité réalisés à l'étape 406 n'est pas conforme, la méthode se poursuit avec les étapes 408 et/ou 409.

Si le premier test de conformité, concernant les liaisons montantes, n'est pas conforme, autrement dit si le premier niveau d'interférences global Epfd_up est supérieur au premier seuil réglementaire pour au moins un point de l'arc géostationnaire, la méthode se poursuit avec une étape 408 qui consiste à identifier les satellites géostationnaires, autrement dit les points de l'arc géostationnaire, qui subissent un niveau d'interférences non conforme.

Si le second test de conformité, concernant les liaisons descendantes, n'est pas conforme, autrement dit si le second niveau d'interférences global Epfd_down est supérieur au second seuil réglementaire pour au moins une position supposée d'un terminal d'un système géostationnaire, la méthode se poursuit avec une étape 409 qui consiste à identifier les terminaux des systèmes géostationnaires, autrement dit les points du maillage de la Terre, qui subissent un niveau d'interférences non conforme.

La méthode se poursuit avec l'étape 410 dans laquelle, pour chaque non-conformité relevée, on identifie les couples (terminal, satellite) du premier système (tels que créés à l'issue de l'étape 403) dont la contribution, dans le calcul d'interférences global, est la plus élevée. Cette recherche est effectuée indépendamment pour le calcul de niveau d'interférences associé aux liaisons montantes epfd_up et pour le calcul de niveau d'interférences associé aux liaisons descendantes epfd_down. Cette recherche peut se faire en évaluant séparément les termes des sommes mises en jeu dans les relations (1) et (2), autrement dit les niveaux d'interférences calculés pour chacun des $N_a$ terminaux (pour les liaisons montantes) ou chacun des $N_b$ satellites (pour les liaisons descendantes) et en recherchant les couples (terminal, satellite) qui produisent le niveau d'interférences le plus élevé pour chacun des deux tests de conformité.

A l'issue de l'étape 410, on obtient donc une liste de terminaux du premier système qui présentent un seuil d'angle de séparation qui engendre, un niveau d'interférences non réglementaire sur les systèmes géostationnaires.

Dans une étape 411, pour chaque terminal de la liste identifiée à l'étape 410, on rétablit la valeur du seuil d'angle de séparation à la valeur fixée à l'itération précédente puis on retire le terminal de la liste des terminaux candidats à l'abaissement de leur seuil d'angle de séparation.

Dans une étape 412, on contrôle si la liste des terminaux candidats à l'abaissement de leur seuil d'angle de séparation est vide, si oui on passe à l'étape 413 qui consiste à mettre à jour, pour chaque terminal, la valeur du seuil d'angle de séparation à la dernière valeur fixée.

Si cette liste 412 n'est pas vide, alors la méthode retourne à l'étape 403 pour une nouvelle itération.

Selon une variante du premier mode de réalisation de l'invention tel que décrit à la figure 4, l'étape 411 est modifiée pour prendre en compte des cas de figure où, lorsque l'on rétablit un seuil d'angle de séparation à sa valeur à l'itération précédente, on arrive à une situation où le terminal considéré ne peut plus communiquer avec aucun satellite sans enfreindre ce seuil. Autrement dit, aucun satellite n'est compatible de la valeur du seuil d'angle de séparation pour le terminal considéré.

Pour prendre en compte cette possibilité, l'étape 411 est modifiée de la façon suivante. Pour chaque terminal de la liste identifiée à l'étape 410, on rétablit la valeur du seuil d'angle de séparation à la valeur fixée à l'itération précédente si au moins un satellite est accessible, pour ce terminal, avec l'ancienne valeur.

Dans le cas contraire, la valeur du seuil d'angle de séparation est maintenue et le niveau d'interférences global du système est abaissé en adaptant les caractéristiques RF des liaisons impliquant le terminal et un satellite du système. L'adaptation peut concerner la densité de puissance du signal émis par le terminal (liaison montante) ou du signal émis par le satellite (liaison descendante). L'adaptation peut également concerner le type d'antenne du satellite et/ou la fréquence des signaux échangés et/ou la polarisation de ces signaux.

L'étape 411 se termine dans tous les cas par le retrait du terminal de la liste des terminaux candidats à l'abaissement de leur seuil d'angle de séparation.

Dans un deuxième mode de réalisation, selon l'invention, de la méthode de détermination dynamique d'un seuil d'angle de séparation pour chaque terminal, exécutée à l'étape 207, les liaisons montantes et les liaisons descendantes sont considérées indépendantes. Autrement dit, un même terminal peut communiquer avec un premier satellite selon une liaison montante et avec un second satellite selon une liaison descendante. Dans ce deuxième exemple, on considère séparément un premier seuil d'angle de séparation pour les liaisons montantes et un second seuil d'angle de séparation pour les liaisons descendantes.

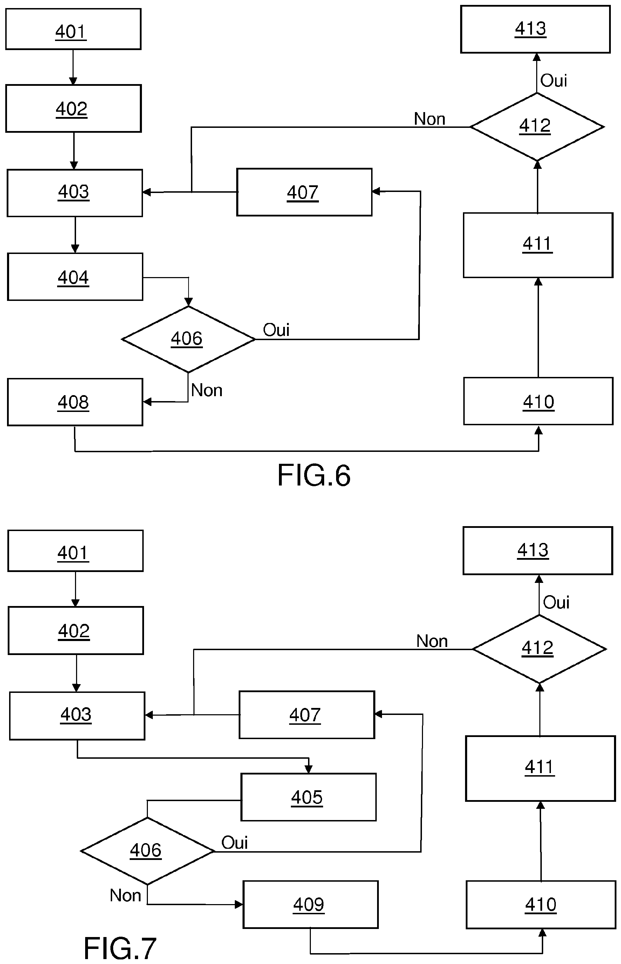

La méthode décrite à la figure 4 est alors appliquée indépendamment pour les liaisons montantes et pour les liaisons descendantes. On a représenté les étapes de la méthode selon le deuxième mode de réalisation appliqué aux liaisons montantes sur la figure 6 et appliqué aux liaisons descendantes sur la figure 7.

La méthode décrite à la figure 6 pour les liaisons unidirectionnelles montantes est identique à celle décrite à la figure 4 pour les liaisons bidirectionnelles à l'exception du fait que les étapes 405 et 409, qui concernent le calcul d'interférences générées par les liaisons descendantes, sont supprimées.

La méthode décrite à la figure 7 pour les liaisons unidirectionnelles descendantes est identique à celle décrite à la figure 4 pour les liaisons bidirectionnelles à l'exception du fait que les étapes 404 et 408, qui concernent le calcul d'interférences générées par les liaisons montantes, sont supprimées.

Les deux exemples de réalisation de la méthode, selon l'invention, de détermination dynamique d'un seuil d'angle de séparation tels que décrits à l'appui de l'algorithme de la figure 4 sont donnés à titre illustratifs. Sans sortir du cadre de l'invention, la méthode peut être mise en œuvre par le biais d'autres implémentations. En particulier, le traitement itératif décrit à la figure 4 peut être remplacé par un algorithme consistant à calculer les niveaux d'interférence globaux Epfd_up, Epfd_down pour plusieurs seuils d'angles de séparation, pris dans une plage de variation. Par exemple, on peut calculer les niveaux d'interférences globaux pour des seuils d'angles de séparation variant de 2° à 7° par pas de 0,5°. L'ensemble des résultats de calcul est sauvegardé en mémoire puis une optimisation paramétrique est réalisée pour déterminer, pour chaque terminal actif, le seuil d'angle de séparation qui permet d'obtenir le niveau d'interférences global le plus faible ou qui permet d'obtenir un niveau d'interférences global respectant le seuil réglementaire.

**Revendications**

1. Méthode d'allocation de ressources radio pour l'établissement de communications par satellites dans un premier système de communications comprenant une constellation de satellites défilants (SAT_NGSO1,SAT_NGSO2) et une pluralité de terminaux (TER_NGSO1,TER_NGSO2), la méthode comprenant les étapes suivantes, pour chaque terminal (TER_NGSO1,TER_NGSO2) :

   - déterminer (207), un seuil d'angle de séparation distinct à respecter vis-à-vis d'une constellation de satellites géostationnaires (SAT_GSO), un angle de séparation étant défini comme l'angle topocentrique le plus faible sous lequel un satellite défilant (SAT_NGSO1,SAT_NGSO2) donné et un satellite géostationnaire (SAT_GSO) quelconque de l'arc géostationnaire sont vus depuis un terminal (TER_NGSO1,TER_NGSO2) donné,
   - autoriser (210) le terminal (TER_NGSO1,TER_NGSO2) à établir une liaison de communication avec un satellite défilant (SAT_NGSO1,SAT_NGSO2) si l'angle de séparation ($\alpha t_1^1$, $\alpha t_2^2$) associé à ladite liaison est supérieur ou égal au seuil d'angle de séparation.

2. Méthode d'allocation de ressources radio pour l'établissement de communications par satellites selon la revendication 1 dans laquelle le seuil d'angle de séparation distinct à respecter, pour chaque terminal, (TER_NGSO1,TER_NGSO2) est déterminé de manière à ce que l'ensemble des liaisons de communications autorisées (210) engendrent, sur un système de communications par satellites géostationnaires, un niveau de puissance interférente conforme à une limite réglementaire.

3. Méthode d'allocation de ressources radio pour l'établissement de communications par satellites selon l'une des revendications précédentes dans laquelle la détermination (207) d'un seuil d'angle de séparation comprend :

   - le calcul (404,505) d'au moins un niveau de puissance interférente engendrée par l'ensemble des liaisons de communications entre lesdits terminaux (TER_NGSO1,TER_NGSO2) et les satellites défilants (SAT_NGSO1,SAT_NGSO2) vers un système de communications par satellites géostationnaires,
- la recherche itérative (406,407,408,409,410,411,412), pour chaque terminal (TER_NGSO1,TER_NGSO2), de la valeur minimale du seuil d'angle de séparation permettant de maintenir ledit au moins un niveau de puissance interférente calculé conforme à une limite réglementaire.

4. Méthode d'allocation de ressources radio pour l'établissement de communications par satellites selon la revendication 3 dans laquelle la détermination (207) d'un seuil d'angle de séparation comprend une phase (401,402) d'initialisation consistant à attribuer (401) une valeur initiale au seuil d'angle de séparation, pour chaque terminal, et à déclarer (402) chaque terminal candidat à l'abaissement de son seuil d'angle de séparation.

5. Méthode d'allocation de ressources radio pour l'établissement de communications par satellites selon la revendication 4 dans laquelle ladite recherche itérative comprend, pour chaque terminal et à chaque itération, l'association (403) dudit terminal avec un satellite défilant respectant le seuil d'angle de séparation déterminé à l'itération courante et pour lequel l'angle de séparation est le plus proche dudit seuil, les itérations étant poursuivies tant qu'au moins un terminal est candidat à l'abaissement de son seuil d'angle de séparation.

6. Méthode d'allocation de ressources radio pour l'établissement de communications par satellites selon la revendication 5 dans laquelle les liaisons de communication entre lesdits terminaux (TER_NGSO1,TER_NGSO2) et les satellites défilants (SAT_NGSO1,SAT_NGSO2) sont bidirectionnelles ou unidirectionnelles montantes et ladite recherche itérative comprend le calcul (404) d'un premier niveau de puissance interférente engendrée par l'ensemble des liaisons de communications montantes vers l'arc géostationnaire pour un ensemble de positions supposées de satellites géostationnaires.

7. Méthode d'allocation de ressources radio pour l'établissement de communications par satellites selon la revendication 6 dans laquelle le calcul (404) dudit premier niveau de puissance interférente est déterminé en choisissant, pour chaque satellite géostationnaire, une direction de pointage qui permet de maximiser la valeur dudit premier niveau de puissance interférente.

8. Méthode d'allocation de ressources radio pour l'établissement de communications par satellites selon l'une des revendications 6 ou 7 dans laquelle ladite recherche itérative comprend la recherche (408) d'au moins un satellite géostationnaire pour lequel le premier niveau de puissance interférente calculé n'est pas conforme à la dite limite réglementaire.

9. Méthode d'allocation de ressources radio pour l'établissement de communications par satellites selon la revendication 5 dans laquelle les liaisons de communications entre lesdits terminaux (TER_NGSO1,TER_NGSO2) et les satellites défilants (SAT_NGSO1,SAT_NGSO2) sont unidirectionnelles descendantes et ladite recherche itérative comprend le calcul (405) d'un second niveau de puissance interférente engendrée par l'ensemble des liaisons de communication descendantes vers un ensemble de positions supposées de terminaux (TER_GSO) appartenant à un système de communications par satellites géostationnaires.

10. Méthode d'allocation de ressources radio pour l'établissement de communications par satellites selon l'une des revendications 6 à 8 dans laquelle les liaisons de communication entre lesdits terminaux (TER_NGSO1,TER_NGSO2) et les satellites défilants (SAT_NGSO1,SAT_NGSO2) sont bidirectionnelles et ladite recherche itérative comprend le calcul (405) d'un second niveau de puissance interférente engendrée par l'ensemble des liaisons de communication descendantes vers un ensemble de positions supposées de terminaux (TER_GSO) appartenant à un système de communications par satellites géostationnaires.

11. Méthode d'allocation de ressources radio pour l'établissement de communications par satellites selon l'une des revendications 9 ou 10 dans laquelle le calcul (405) dudit second niveau de puissance interférente est déterminé en choisissant, pour chaque terminal (TER_GSO) appartenant à un système de communications par satellites géostationnaires, une direction de pointage qui permet de maximiser la valeur dudit second niveau de puissance interférente.

12. Méthode d'allocation de ressources radio pour l'établissement de communications par satellites selon l'une des revendications 9 à 11 dans laquelle ladite recherche itérative comprend la recherche (409) d'au moins un terminal appartenant à un système de communications par satellites géostationnaires pour lequel le second niveau de puissance interférente calculé n'est pas conforme audit seuil réglementaire.

**13.** Méthode d'allocation de ressources radio pour l'établissement de communications par satellites selon l'une des revendications 8 à 12 dans laquelle ladite recherche itérative comprend, pour chaque premier ou second niveau de puissance interférente calculé non conforme audit seuil réglementaire, la recherche (410) d'au moins un couple (terminal, satellite défilant) dont la contribution, dans la valeur du premier ou du second niveau de puissance interférente, est la plus élevée.

**14.** Méthode d'allocation de ressources radio pour l'établissement de communications par satellites selon la revendication 13 dans laquelle ladite recherche itérative comprend, pour chaque terminal du couple (terminal, satellite défilant) retenu, le rétablissement (411) du seuil d'angle de séparation déterminé à l'itération précédente et le retrait dudit terminal de la liste des candidats à l'abaissement du seuil d'angle de séparation.

**15.** Méthode d'allocation de ressources radio pour l'établissement de communications par satellites selon la revendication 13 dans laquelle ladite recherche itérative comprend, pour au moins un terminal du couple (terminal, satellite défilant) retenu, l'adaptation des caractéristiques RF d'au moins une liaison impliquant ledit terminal et un satellite défilant, de sorte à diminuer le niveau de puissance interférente de l'ensemble des liaisons de communications autorisées (210) sur un système de communications par satellites géostationnaires.

**16.** Méthode d'allocation de ressources radio pour l'établissement de communications par satellites selon l'une des revendications 6 à 15 dans laquelle la recherche itérative comprend une vérification (406) de la conformité du premier niveau de puissance interférente et/ou du second niveau de puissance interférente et, si la conformité est vérifiée, l'abaissement (407) du seuil d'angle de séparation d'une valeur prédéterminée, pour chaque terminal candidat à l'abaissement de son seuil d'angle de séparation.

**17.** Méthode d'allocation de ressources radio pour l'établissement de communications par satellites selon l'une des revendications 4 à 16 dans laquelle la recherche itérative est arrêtée lorsqu'aucun terminal n'est plus candidat à l'abaissement de son seuil d'angle de séparation.

**18.** Dispositif d'allocation de ressources radio pour l'établissement de communications par satellites comprenant des moyens, incluant au moins un processeur et une mémoire, configurés pour mettre en œuvre la méthode d'allocation de ressources radio selon l'une des revendications précédentes.

**19.** Programme d'ordinateur comportant des instructions pour l'exécution de la méthode d'allocation de ressources radio pour l'établissement de communications par satellites selon l'une quelconque des revendications 1 à 17, lorsque le programme est exécuté par un processeur.

**20.** Support d'enregistrement lisible par un processeur sur lequel est enregistré un programme comportant des instructions pour l'exécution de la méthode d'allocation de ressources radio pour l'établissement des communications par satellites selon l'une quelconque des revendications 1 à 17, lorsque le programme est exécuté par un processeur.

**Patentansprüche**

**1.** Funkressourcen-Zuteilungsverfahren zum Herstellen von Kommunikationen durch Satelliten in einem ersten Kommunikationssystem, umfassend eine Konstellation vorbeiziehender Satelliten (SAT_NGSO1, SAT_NGSO2) und eine Vielzahl von Endgeräten (TER_NGSO1, TER_NGSO2), wobei das Verfahren für jedes Endgerät (TER_NGSO1, TER_NGSO2) die folgenden Schritte umfasst:

- Bestimmen (207) eines gesonderten Trennwinkelgrenzwerts, der gegenüber einer Konstellation geostationärer Satelliten (SAT_GSO) einzuhalten ist, wobei ein Trennwinkel als der kleinste topozentrische Winkel definiert ist, bei dem ein bestimmter vorbeiziehender Satellit (SAT_NGSO1, SAT_NGSO2) und ein beliebiger geostationärer Satellit (SAT_GSO) des geostationären Bogens von einem bestimmten Endgerät (TER_NGSO1, TER_NGSO2) aus gesehen werden,
- Gestatten (210), dem Endgerät (TER_NGSO1, TER_NGSO2), eine Kommunikationsverbindung mit einem vorbeiziehenden Satelliten (SAT_NGSO1, SAT_NGSO2) herzustellen, wenn der der Verbindung zugeordnete Trennwinkel ($at_1{}^1$, $at_2{}^2$) größer oder gleich dem Trennwinkelgrenzwert ist.

**2.** Funkressourcen-Zuteilungsverfahren zum Herstellen von Kommunikationen durch Satelliten nach Anspruch 1, wobei der für jedes Endgerät (TER_NGSO1, TER_NGSO2) einzuhaltende gesonderte Trennwinkelgrenzwert derart bestimmt ist, dass die Gesamtheit der gestatteten Kommunikationsverbindungen (210) über ein Kommunikationssystem durch geostationäre Satelliten ein Interferenzleistungsniveau erzeugen, das einer gesetzlichen Grenze entspricht.

3. Funkressourcen-Zuteilungsverfahren zum Herstellen von Kommunikationen durch Satelliten nach einem der vorangehenden Ansprüche, wobei das Bestimmen (207) eines Trennwinkelgrenzwerts umfasst:

- das Berechnen (404, 505) mindestens eines Niveaus einer Interferenzleistung, die von der Gesamtheit der Kommunikationsverbindungen zwischen den Endgeräten (TER_NGSO1, TER_NGSO2) und den vorbeiziehenden Satelliten (SAT_NGSO1, SAT_NGSO2) zu einem Kommunikationssystem durch geostationäre Satelliten erzeugt wird,
- das iterative Suchen (406, 407, 408, 409, 410, 411, 412), für jedes Endgerät (TER_NGSO1, TER_NGSO2), des minimalen Werts des Trennwinkelgrenzwerts, der es ermöglicht, das mindestens eine berechnete Interferenzleistungsniveau aufrechtzuerhalten, das einer gesetzlichen Grenze entspricht.

4. Funkressourcen-Zuteilungsverfahren zum Herstellen von Kommunikationen durch Satelliten nach Anspruch 3, wobei das Bestimmen (207) eines Trennwinkelgrenzwerts eine Initialisierungsphase (401, 402) umfasst, die darin besteht, dem Trennwinkelgrenzwert für jedes Endgerät einen Initialwert zuzuweisen (401) und jedes Endgerät als Kandidat für die Senkung seines Trennwinkelgrenzwerts zu erklären (402).

5. Funkressourcen-Zuteilungsverfahren zum Herstellen von Kommunikationen durch Satelliten nach Anspruch 4, wobei die iterative Suche für jedes Endgerät und bei jeder Iteration die Kombination (403) des Endgeräts mit einem vorbeiziehenden Satelliten umfasst, der den bei der laufenden Iteration bestimmten Trennwinkelgrenzwert einhält und für den der Trennwinkel der dem Grenzwert nächste ist, wobei die Iterationen fortgesetzt werden, sobald mindestens ein Endgerät Kandidat für die Senkung seines Trennwinkelgrenzwerts ist.

6. Funkressourcen-Zuteilungsverfahren zum Herstellen von Kommunikationen durch Satelliten nach Anspruch 5, wobei die Kommunikationsverbindungen zwischen den Endgeräten (TER_NGSO1, TER_NGSO2) und den vorbeiziehenden Satelliten (SAT_NGSO1, SAT_NGSO2) zweidirektional oder eindirektional aufsteigend sind und die iterative Suche die Berechnung (404) eines ersten Niveaus einer Interferenzleistung, erzeugt von der Gesamtheit der zum geostationären Bogen aufsteigenden Kommunikationsverbindungen für eine Gesamtheit angenommener Positionen geostationärer Satelliten, umfasst.

7. Funkressourcen-Zuteilungsverfahren zum Herstellen von Kommunikationen durch Satelliten nach Anspruch 6, wobei die Berechnung (404) des ersten Interferenzleistungsniveaus durch Auswahl, für jeden geostationären Satelliten, einer Ausrichtung bestimmt ist, die es ermöglicht, den Wert des ersten Interferenzleistungsniveaus zu maximieren.

8. Funkressourcen-Zuteilungsverfahren zum Herstellen von Kommunikationen durch Satelliten nach einem der Ansprüche 6 oder 7, wobei die iterative Suche die Suche (408) mindestens eines geostationären Satelliten umfasst, für den das berechnete erste Interferenzleistungsniveau nicht mit dem gesetzlichen Grenzwert übereinstimmt.

9. Funkressourcen-Zuteilungsverfahren zum Herstellen von Kommunikationen durch Satelliten nach Anspruch 5, wobei die Kommunikationsverbindungen zwischen den Endgeräten (TER_NGSO1, TER_NGSO2) und den vorbeiziehenden Satelliten (SAT_NGSO1, SAT_NGSO2) eindirektional absteigend sind und die iterative Suche die Berechnung (405) eines zweiten Niveaus einer Interferenzleistung, erzeugt durch die Gesamtheit der absteigenden Kommunikationsverbindungen zu einer Gesamtheit angenommener Positionen von Endgeräten (TER_GSO), die zu einem Kommunikationssystem durch geostationäre Satelliten gehören, umfasst.

10. Funkressourcen-Zuteilungsverfahren zum Herstellen von Kommunikationen durch Satelliten nach einem der Ansprüche 6 bis 8, wobei die Kommunikationsverbindungen zwischen den Endgeräten (TER_NGSO1, TER_NGSO2) und den vorbeiziehenden Satelliten (SAT_NGSO1, SAT_NGSO2) zweidirektional sind und die iterative Suche die Berechnung (405) eines zweiten Niveaus einer Interferenzleistung, erzeugt durch die Gesamtheit der absteigenden Kommunikationsverbindungen zu einer Gesamtheit angenommener Positionen von Endgeräten (TER_GSO), die zu einem Kommunikationssystem durch geostationäre Satelliten gehören, umfasst.

11. Funkressourcen-Zuteilungsverfahren zum Herstellen von Kommunikationen durch Satelliten nach einem der Ansprüche 9 oder 10, wobei die Berechnung (405) des zweiten Interferenzleistungsniveaus durch Auswählen, für jedes Endgerät (TER_GSO), das zu einem Kommunikationssystem durch geostationäre Satelliten gehört, einer Ausrichtung bestimmt ist, die es ermöglicht, den Wert des zweiten Interferenzleistungsniveaus zu maximieren.

12. Funkressourcen-Zuteilungsverfahren zum Herstellen von Kommunikationen durch Satelliten nach einem der Ansprüche 9 bis 11, wobei die iterative Suche die Suche (409) mindestens eines Endgeräts umfasst, das zu einem Kommunikationssystem durch geostationäre Satelliten gehört, für das das berechnete zweite Interferenzleistungsniveau nicht mit dem gesetzlichen Grenzwert übereinstimmt.

13. Funkressourcen-Zuteilungsverfahren zum Herstellen von Kommunikationen durch Satelliten nach einem der Ansprüche 8 bis 12, wobei die iterative Suche für jedes berechnete erste oder zweite Interferenzleistungsniveau, das nicht mit dem gesetzlichen Grenzwert übereinstimmt, die Suche (410) mindestens eines Paars (Endgerät, vorbeiziehender Satellit) umfasst, dessen Beitrag im Wert des ersten oder des zweiten Interferenzleistungsniveaus am höchsten ist.

14. Funkressourcen-Zuteilungsverfahren zum Herstellen von Kommunikationen durch Satelliten nach Anspruch 13, wobei die iterative Suche für jedes Endgerät des betrachteten Paars (Endgerät, vorbeiziehender Satellit) die Wiederherstellung (411) des bei der vorangehenden Iteration bestimmten Trennwinkelgrenzwerts und die Streichung des Endgeräts von der Liste der Kandidaten für eine Senkung des Trennwinkelgrenzwerts umfasst.

15. Funkressourcen-Zuteilungsverfahren zum Herstellen von Kommunikationen durch Satelliten nach Anspruch 13, wobei die iterative Suche für mindestens ein Endgerät des betrachteten Paars (Endgerät, vorbeiziehender Satellit) die Anpassung der FR-Merkmale mindestens einer Verbindung, die das Endgerät und einen vorbeiziehenden Satelliten einbezieht, derart umfasst, dass das Interferenzleistungsniveau der Gesamtheit der gestatteten Kommunikationsverbindungen (210) über ein Kommunikationssystem durch geostationäre Satelliten gesenkt wird.

16. Funkressourcen-Zuteilungsverfahren zum Herstellen von Kommunikationen durch Satelliten nach einem der Ansprüche 6 bis 15, wobei die iterative Suche eine Überprüfung (406) der Konformität des ersten Interferenzleistungsniveaus und/oder des zweiten Interferenzleistungsniveaus und, wenn die Konformität überprüft ist, die Senkung (407) des Trennwinkelgrenzwerts um einen vorher festgelegten Wert für jedes Endgerät, das Kandidat für die Senkung seines Trennwinkelgrenzwerts ist, umfasst.

17. Funkressourcen-Zuteilungsverfahren zum Herstellen von Kommunikationen durch Satelliten nach einem der Ansprüche 4 bis 16, wobei die iterative Suche eingestellt wird, wenn kein Endgerät mehr Kandidat für die Senkung seines Trennwinkelgrenzwerts ist.

18. Funkressourcen-Zuteilungsverfahren zum Herstellen von Kommunikationen durch Satelliten, umfassend Mittel, die mindestens einen Prozessor und einen Speicher einschließen, die ausgelegt sind, um das Funkressourcen-Zuteilungsverfahren nach einem der vorangehenden Ansprüche durchzuführen.

19. Rechnerprogramm, aufweisend Befehle zum Ausführen des Funkressourcen-Zuteilungsverfahrens zum Herstellen von Kommunikationen durch Satelliten nach einem der Ansprüche 1 bis 17, wenn das Programm von einem Prozessor ausgeführt wird.

20. Prozessorlesbares Speichermedium, auf dem ein Programm gespeichert ist, das Befehle zum Ausführen des Funkressourcen-Zuteilungsverfahrens zum Herstellen von Kommunikationen durch Satelliten nach einem der Ansprüche 1 bis 17 aufweist, wenn das Programm von einem Prozessor ausgeführt wird.

**Claims**

1. Method for allocating radio resources for setting up satellite communications in a first communication system comprising a constellation of non-GSO satellites (SAT_NGSO1,SAT_NGSO2) and a plurality of terminals (TER_NGSO1, TER_NGSO2), the method comprising the following steps, for each terminal (TER_NGSO1, TER_NGSO2):

   - determining (207) a distinct separation angle threshold to be observed with respect to a constellation of geostationary satellites (SAT_GSO), a separation angle being defined as the smallest topocentric angle by which a given non-GSO satellite (SAT_NGSO1,SAT_NGSO2) and any geostationary satellite (SAT_GSO) of the geostationary arc are seen from a given terminal (TER_NGSO1,TER_NGSO2),
   - authorising (210) the terminal (TER_NGSO1, TER_NGSO2) to set up a communication link with a non-GSO satellite (SAT_NGSO1, SAT_NGSO2) if the separation angle ($\alpha t_1^1$, $\alpha t_2^2$) associated with said link is greater than or equal to the separation angle threshold.

2. Method for allocating radio resources for setting up satellite communications according to claim 1, in which the distinct separation angle threshold to be observed for each terminal (TER_NGSO1, TER_NGSO2) is determined in such a way that all authorised communication links (210) generate, on a geostationary satellite communication system, an interfering power level conforming to a regulatory limit.

3. Method for allocating radio resources for setting up satellite communications according to any of the preceding claims, in which the determination (207) of a separation angle threshold comprises:

    - the computation (404, 505) of at least one interfering power level generated by the set of communication links between said terminals (TER_NGSO1, TER_NGSO2) and the non-GSO satellites (SAT_NGSO1, SAT_NGSO2) towards a geostationary satellite communication system,
    - the iterative search (406, 407, 408, 409, 410, 411, 412), for each terminal (TER_NGSO1, TER_NGSO2), for the minimum separation angle threshold value that makes it possible to keep said at least one computed interfering power level in accordance with a regulatory limit.

4. Method for allocating radio resources for setting up satellite communications according to claim 3, in which the determination (207) of a separation angle threshold comprises an initialisation phase (401, 402) consisting in assigning (401) an initial value to the separation angle threshold, for each terminal, and declaring (402) each terminal a candidate for the lowering of its separation angle threshold.

5. Method for allocating radio resources for setting up satellite communications according to claim 4, in which said iterative search comprises, for each terminal and on each iteration, the association (403) of said terminal with a non-GSO satellite observing the separation angle threshold determined on the current iteration and for which the separation angle is closest to said threshold, the iterations being continued as long as at least one terminal is a candidate for the lowering of its separation angle threshold.

6. Method for allocating radio resources for setting up satellite communications according to claim 5, in which the communication links between the terminals (TER_NGSO1, TER_NGSO2) and the non-GSO satellites (SAT_NGSO1, SAT_NGSO2) are two-way or one-way uplinks and said iterative search comprises the computation (404) of a first interfering power level generated by the set of communication uplinks to the geostationary arc for a set of assumed positions of geostationary satellites.

7. Method for allocating radio resources for setting up satellite communications according to claim 6, in which the computation (404) of said first interfering power level is determined by choosing, for each geostationary satellite, a pointing direction which makes it possible to maximize the value of said first interfering power level.

8. Method for allocating radio resources for setting up satellite communications according to claim 6 or 7, in which said iterative search comprises the search (408) for at least one geostationary satellite for which the first computed interfering power level is not in accordance with said regulatory limit.

9. Method for allocating radio resources for setting up satellite communications according to claim 5, in which the communication links between the terminals (TER_NGSO1, TER_NGSO2) and the non-GSO satellites (SAT_NGSO1, SAT_NGSO2) are one-way down links and said iterative search comprises the computation (405) of a second interfering power level generated by the set of downlink communication to a set of assumed positions of terminals (TER_GSO) belonging to a geostationary satellite communication system.

10. Method for allocating radio resources for setting up satellite communications according to any of claims 6 to 8, in which the communication links between the terminals (TER_NGSO1, TER_NGSO2) and the non-GSO satellites (SAT_NGSO1, SAT_NGSO2) are two-way and said iterative search comprises the computation (405) of a second interfering power level generated by the set of downlink communication to a set of assumed positions of terminals (TER_GSO) belonging to a geostationary satellite communication system.

11. Method for allocating radio resources for setting up satellite communications according to any of claim 9 or 10, in which the computation (405) of said second interfering power level is determined by choosing, for each terminal (TER_GSO) belonging to a geostationary satellite communication system, a pointing direction which makes it possible to maximize the value of said second interfering power level.

**12.** Method for allocating radio resources for setting up satellite communications according to any of claims 9 to 11, in which said iterative search comprises the search (409) for at least one terminal belonging to a geostationary satellite communication system for which the second computed interfering power level is not in accordance with said regulatory threshold.

**13.** Method for allocating radio resources for setting up satellite communications according to any of claims 8 to 12, in which said iterative search comprises, for each first or second computed interfering power level not in accordance with said regulatory threshold, the search (410) for at least one pair (terminal, non-GSO satellite) whose contribution, in the value of the first or the second interfering power level, is highest.

**14.** Method for allocating radio resources for setting up satellite communications according to claim 13, in which said iterative search comprises, for each terminal of the pair (terminal, non-GSO satellite) retained, the re-establishment (411) of the separation angle threshold determined on the preceding iteration and the removal of said terminal from the list of the candidates for the lowering of the separation angle threshold.

**15.** Method for allocating radio resources for setting up satellite communications according to claim 13, in which said iterative search comprises, for at least one terminal of the pair (terminal, non-GSO satellite) retained, the adaptation of the RF characteristics of at least one link involving said terminal and a non-GSO satellite, so as to reduce the interfering power level of the set of authorised communication links (210) on a geostationary satellite communication system.

**16.** Method for allocating radio resources for setting up satellite communications according to any of claims 6 to 15, in which the iterative search comprises a check (406) of the conformity of the first interfering power level and/or of the second interfering power level and, if the conformity is borne out, the lowering (407) of the separation angle threshold by a predetermined value, for each terminal that is a candidate for the lowering of its separation angle threshold.

**17.** Method for allocating radio resources for setting up satellite communications according to any of claims 4 to 16, in which the iterative search is stopped when there is no longer any terminal that is a candidate for the lowering of its separation angle threshold.

**18.** Device for allocating radio resources for setting up satellite communications comprising means, including at least one processor and one memory, configured to implement a method for allocating radio resources according to any of the preceding claims.

**19.** A computer program comprising instructions for executing the method for allocating radio resources for setting up satellite communications according to any of claims 1 to 17, when the program is executed by a processor.

**20.** A computer readable storage medium on which a program is registered comprising instructions for executing the method for allocating radio resources for setting up satellite communications according to any of claims 1 to 17, when the program is executed by a processor.

FIG.1

FIG.2

FIG.3

EP 3 182 615 B1

FIG.4

FIG.5a

FIG.5b

401

↓

402

↓

403

↓

404

406

Oui → 411

Non → 408

407 → 403

412

Non → 403

Oui → 413

410

408 → 410

FIG.6

401

↓

402

↓

403

405

406

Oui → 407

Non → 409

407 → 403

412

Non → 403

Oui → 413

411

410

409 → 410

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040110467 A

- US 20030073404 A1